# EUROPÄISCHE PATENTANMELDUNG

(11) **EP 2 157 376 A2**
(43) Veröffentlichungstag der Anmeldung: **24.02.2010**
(21) Anmeldenummer: 09010771.5
(22) Anmeldetag: 21.08.2009
(51) Int. Cl.: F24D 19/10

(54) **System zum Kühlen oder Heizen und Anordnung zum hydraulischen Abgleichen eines wasser- oder dampfführenden Systems zum Kühlen oder Heizen**

(30) Priorität: 23.08.2008 DE 102008039525
(71) Anmelder: Honeywell Technologies Sarl, 1110 Morges (CH)
(72) Erfinder: Hilborne-Clarke, Axel, 59821 Arnsberg (DE)
(74) Vertreter: Graefe, Jörg

(57) **Zusammenfassung**

System zum Kühlen oder Heizen mit einem flüssigen oder gasförmigen Wärmeträger umfassend:
- wenigstens eine Vorlauf-Leitung zum Transport des Wärmeträgers von wenigstens einem Wärmeerzeuger zu einer oder mehreren Verbrauchsstellen,
- wenigstens eine Rücklauf-Leitung zum Transport des Wärmeträgers von der oder den Verbrauchsstellen zu dem wenigstens einen Wärmeerzeuger,
- wenigstens eine zum Einstellen eines Strömungswiderstands geeignete und eingerichtete Drosselarmatur,
- wenigstens ein zum Ermitteln von eines Volumenstroms des Wärmeträgers in der Vorlauf-Leitung und/oder der Rücklaufleitung geeignete und eingerichtete Messeinrichtung,

wobei die wenigstens eine Messeinrichtung ein Wärmezähler ist, der ein Mittel zur Messung des Volumenstroms in der Vorlauf-Leitung und/oder der Rücklauf-Leitung umfasst.

## Beschreibung

Die vorliegende Erfindung betrifft eine Anordnung zum hydraulischen Abgleichen eines einen Wärmeträger führenden, insbesondere wasser- oder dampfführenden Systems zum Kühlen oder Heizen mit mehreren Leitungen. Die Erfindung betrifft ferner ein System zum Kühlen oder Heizen mit mehreren Leitungen, das einen Wärmeträger führt, insbesondere ein wasser- oder dampfführendes System. Schließlich betrifft die Erfindung ebenfalls ein Verfahren zum Abgleichen eines mit einer vorgenannten Anordnung ausgestatteten Systems zum Kühlen oder Heizen.

In der Druckschrift mit der Veröffentlichungsnummer EP 1 163 478 B1 ist wasserführendes System zum Heizen mit mehreren Leitungen bekannt. In dem System wird das Wasser zwischen einem Wärmeerzeuger und einem Wärmeverbraucher unter Überwindung von Rohrnetzwiderständen zirkulierend umgewälzt. Die Verbraucher stellen in dem hydraulischen System variable oder feste Widerstände dar. In dem System ist eine Einrichtung zur Beeinflussung der Wärmetransportleistung, insbesondere über eine Veränderung einer Vorlauftemperatur angeordnet. In den Leitungen des hydraulischen Systems sind Drosselarmaturen mit elektronischen Volumenstrommesseinheiten eingebaut. Mit den Volumenstrommesseinheiten können Volumenströme durch die Drosselarmaturen erfasst und als Ist-Wert in eine Steuer- und Regelvorrichtung gegeben werden. Von einer Auswerteeinheit erhält die Steuer- und Regelvorrichtung eine Führungsgröße als Soll-Volumenstrom und ermittelt durch einen Vergleich des Ist-Volumenstroms mit dem Soll-Volumenstrom eine Stellgröße, die zu einer Stelleinrichtung geleitet wird. Mittels der Stelleinrichtung wird die Drosselstellung einer oder mehrerer Drosselarmaturen verändert.

Die elektronischen Volumenstrommesseinheiten, die Steuer- und Regelungsvorrichtung und die Stelleinrichtungen sind fest in dem hydraulischen System angeordnet.

Mit einer aus der Druckschrift EP 1 163 478 B1 bekannten Anordnung kann ein hydraulisches System während des Betriebs laufend überwacht und hydraulisch abgeglichen werden. So kann erreicht werden, dass die über das hydraulische System und insbesondere die verschiedenen Leitungen des hydraulischen Systems zu verteilenden Wärmemengen einerseits ausreichend sind, um die notwendige thermische Energie über die Leitungen in einem Gebäude zu verteilen, und andererseits die Energie möglichst effizient und ohne Energieverluste verteilt wird, so dass die Erzeugung der thermischen Energie stets so sparsam wie möglich erfolgen kann.

Ein hydraulischer Abgleich des Systems während des laufenden Betriebs ist für eine effiziente Verteilung der thermischen Energie sinnvoll. Sie ist allerdings mit dem in der genannten Druckschrift vorgeschlagenen System sehr aufwändig.

Die Messung des Volumenstroms mit einer elektronischen Volumenstrommesseinheit kann mit verschiedenen Messprinzipien erfolgen. Eine Methode zur Messung des Volumenstroms ist die Differenzdruckmethode. Andere Messprinzipien beruhen auf Ultraschallmessungen.

Die meisten Volumenstrommessmethoden sind problembehaftet. So ist die Differenzdruckmethode beispielsweise anfällig für Störungen, zum Beispiel wie Luft- oder Schmutzpartikel in dem hydraulischen System. Dadurch kann ein sehr großer Messfehler entstehen. Der Nachteil der auf Ultraschallmessungen beruhenden Messprinzipien liegt in den hohen Kosten und der für die Bedienung benötigten Vorkenntnisse.

Wegen der Probleme beim Abgleichen von hydraulischen Systemen aufgrund der Volumenstrommessungen haben viele Kunden, Installateure, Haustechnikplaner oder Berater Abstand von dem Abgleich der Heizkreisläufe bei der Inbetriebnahme von Systemen der eingangs genannten Art genommen. In den meisten Fällen ist der zum Teil sogar gesetzlich vorgeschriebene Abgleich der Heizkreisläufe nicht oder nur unzureichend durchgeführt worden.

Die sich verschärfenden gesetzlichen Vorschriften und die ansteigenden Energiekosten zwingen hier jedoch zu einen Umdenken. Die effiziente Energienutzung durch ein abgeglichenes Heizsystem rücken wieder in den Mittelpunkt der Überlegungen.

Ein weiterer Nachteil des aus der Druckschrift mit der Veröffentlichungsnummer EP 1 163 478 B1 bekannten Systems ist, dass der Einbau von Volumenstrommesseinheiten, Steuer- und Regelungsvorrichtungen und Stelleinrichtungen in kleineren hydraulischen Systemen keinen Effizienzvorteil bietet, solange dass hydraulische System bei Inbetriebnahme einmalig abgeglichen worden ist. Die für die Komponenten aufzuwendenden Kosten stehen in keinem Verhältnis zu dem Effizienzgewinn und zu den eingesparten Energiekosten.

Vor dem Hintergrund der Nachteile oder Probleme mit dem Stand der Technik lag der Erfindung die Aufgabe zugrunde, ein eingangs genanntes System kostengünstig und zuverlässig während des laufenden Betriebs dauernd oder zumindest bei der Inbetriebnahme abgleichen zu können.

Hier setzt die vorliegende Erfindung an.

Die Aufgabe wird erfindungsgemäß zunächst dadurch gelöst, dass die wenigstens eine Messeinrichtung ein Wärmezähler ist, der ein Mittel zur Messung des Volumenstroms in der Vorlauf-Leitung und/oder der Rücklauf-Leitung umfasst.

Ein Wärmezähler, der auch als Wärmemengenzähler bezeichnet wird, ist eine Messeinrichtung zur Bestimmung der Wärmemenge, die einer Verbrauchstelle zum Beispiel über einen Heizkreislauf zugeführt oder über einen Kühlkreislauf entzogen wird. Der Wärmezähler erfasst dazu Volumenstrom des Wärmeträgers und die Temperaturdifferenz zwischen Vorlauf und Rücklauf und errechnet daraus die an die Verbrauchsstelle gelieferte bzw. die an der Verbrauchsstelle entzogene Wärmemenge. Wärmezähler werden zur Erfassung von Liefermengen und Kosten vor allem bei Hausanschlüssen der Nah- oder Fernwärmeversorgung, der Versorgung Gebäudeteilen oder Heizungsanlagenteilen (z. B. Heizung und Brauchwassererwärmung) oder einzelnen Wohnungen eingesetzt. Sie sind dazu beispielsweise in Übergabestationen der Nah- oder Fernwärmeversorgung oder Wohnungsanschlusskästen untergebracht.

Da die Wärmezähler insbesondere zur Erfassung der Liefermengen und somit in der Regel auch zur Erfassung von Kosten vorgesehen sind, werden in Wärmezählern meistens genau arbeitende Messmittel zur Erfassung des Volumenstroms eingesetzt. Oftmals sind die Wärmezähler geeignet und eingerichtet über einen Datenabfrage ausgelesen zu werden.

Der Erfindung liegt Gedanke zu Grunde die Messmittel zur Erfassung des Volumenstrom der Wärmezähler für den Abgleich der damit ausgestattet Systeme zu nutzen. Dazu werden ggf. die Wärmezähler mit Schnittstellen ausgestattet, die ein laufendes Auslesen des Volumenstroms gestatten.

Die Drosselarmaturen in einem erfindungsgemäßen Systems können Strangregulierventile sein. Diese können Teil einer Übergabestation oder eines Wohnungsanschlusskastens sein.

Ein erfindungsgemäßes System kann wenigstens ein zum Betätigen der Drosselarmaturen geeignete und eingerichtetes Betätigungsmittel, z.B. einen Stellmotor oder Stellantrieb aufweisen, Auch diese können Teil einer Übergabestation oder eines Wohnungsanschlusskastens sein.

Das System kann vorteilhaft wenigstens ein Steuerungs- und/oder Regelmittel aufweist, dass zum Erzeugen von Stellsignalen zum Betätigen der Drosselarmaturen geeignet und eingerichtet ist, die von den ermittelten Volumenströmen abhängenden.

Zum Übertragen der von dem Steuerungs- und/oder Regelmittel erzeugten Stellsignale an die Betätigungsmittel und zum Übertragen der ermittelten Volumenströme von den Messeinrichtung an die Steuerungs- und/oder Regelmittel kann das System geeignete und eingerichtete Kommunikationsmittel, insbesondere Leitungen aufweisen.

Ein weiterer erfindungsgemäße Ansatz zum Lösen der Aufgabe besteht darin die Betätigungsmittel, die Messmittel, Steuerungs- und/oder Regelmittel und/oder Kommunikationsmittel zum Abgleichen des Systems nur für die Zeit einer Inbetriebnahme mit dem System zu verbinden und nach der Durchführung des Abgleiches von dem System zu entfernen. Lediglich die Drosselarmaturen verbleiben in dem System.

Anders als bei dem aus der genannten Druckschrift bekannten System bzw. der aus der Druckschrift bekannten Anordnung, ist damit ein laufender Abgleich während des Betriebs des Systems nicht möglich.
Im Regelfall dürfte jedoch ein einmaliger Abgleich bei der ersten Inbetriebnahme des Systems ausreichend sein, zumindest um den gesetzlichen Vorschriften zu genügen. Ein Vorteil dieser Erfindung liegt darin, dass die Messmittel, die Steuerungs- und/oder Regelmittel, die Kommunikationsmittel und die Stellmittel für den Abgleich von weiteren Systemen genutzt werden können, soweit sie nicht Teil des abgeglichenen Systems sind, wie dies bei den in den Wärmezähler integrierten Messmitteln der Fall sein kann.

In einer Kombination der beiden erfindungsgemäßen Lösungen werden, die Betätigungsmittel, die Steuerungs- und Regelmittel und/oder die Kommunikationsmittel nur für einen Abgleich bei der Inbetriebnahme des Systems verwendet. Eine solche Anordnung weist einen Wärmezähler als Messeinrichtung auf.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: in schematischer Darstellung einen Aufbau eines erfindungsgemäßen Heizungssystems,
- Fig. 2: ein Verfahrensablauf vor der Durchführung des erfindungsgemäßen Verfahrens,
- Fig. 3: ein Ablaufdiagramm des erfindungsgemäßen Verfahrens bei der Inbetriebnahme,
- Fig. 4: ein Ablaufdiagramm des Verfahrens während des laufenden Betriebs,
- Fig. 5: ein erstes Beispiel für eine Nahewärmestation zur Verwendung in der erfindungsgemäßen Anordnung,
- Fig. 6: ein zweites Beispiel für eine Nahewärmestation zur Verwendung in der erfindungsgemäßen Anordnung,
- Fig. 7: ein erstes Beispiel für einen Wohnungsanschlusskastens zur Verwendung in der erfindungsgemäßen Anordnung und
- Fig. 8: ein zweites Beispiel für einen Wohnungsanschlusskastens zur Verwendung in der erfindungsgemäßen Anordnung.

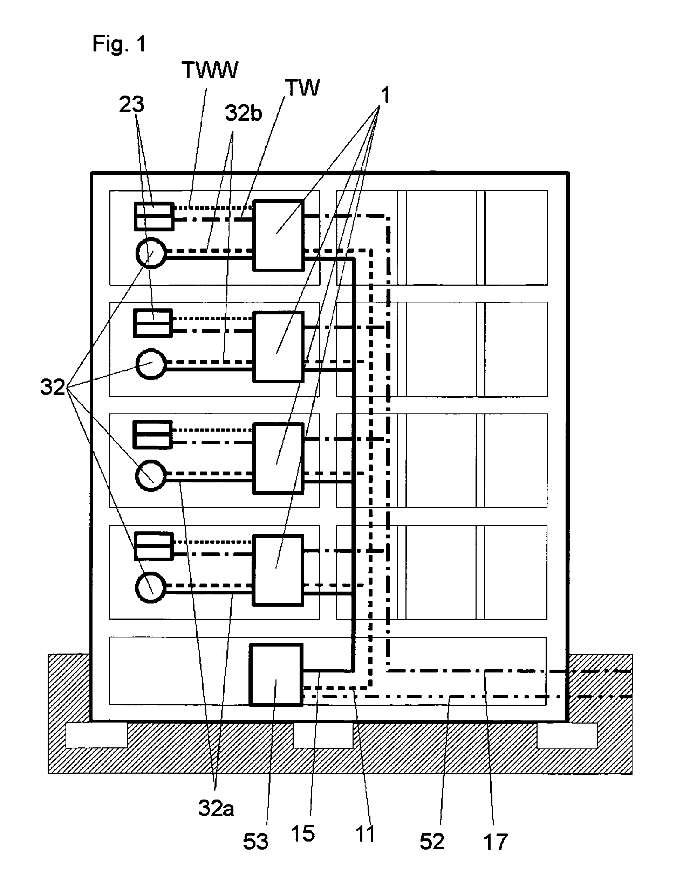

Bei dem in Figur 1 schematisch dargestellten Systems handelt es sich um ein Heizungs- und Warmwassersystem eines Gebäudes mit insgesamt vier Wohneinheiten und einer Wohneinheit pro Etage. Das Gebäude weist einen Kaltwasseranschluss mit einer Wasserleitung 17 zum öffentlichen Netz der Wasserversorgung auf, ebenso wie einen Gasanschluss mit einer Gasleitung 52. Die Gasleitung 52 ist zu einer Zentralheizung 53 im Keller des Gebäudes geführt. An die Zentralheizung53 sind Nahwärmestationen 1 angeschlossen, die auch als Cold-Boiler bezeichnet werden. Die Nahwärmestationen 1 sind ebenso an die Wasserleitung 17 angeschlossen, die in das Gebäude geführt ist und sich in die einzelnen Wohneinheiten verzweigt.

Das über die Gasleitung 52 zugeführte Gas wird in der zentralen Heizungseinheit 53 verbrannt und in Wärme umgesetzt. Diese Wärme wird auf einen Wärmeträger übertragen, der über einen Vorlauf 15 zu den Nahwärmestationen 1 geführt wird.

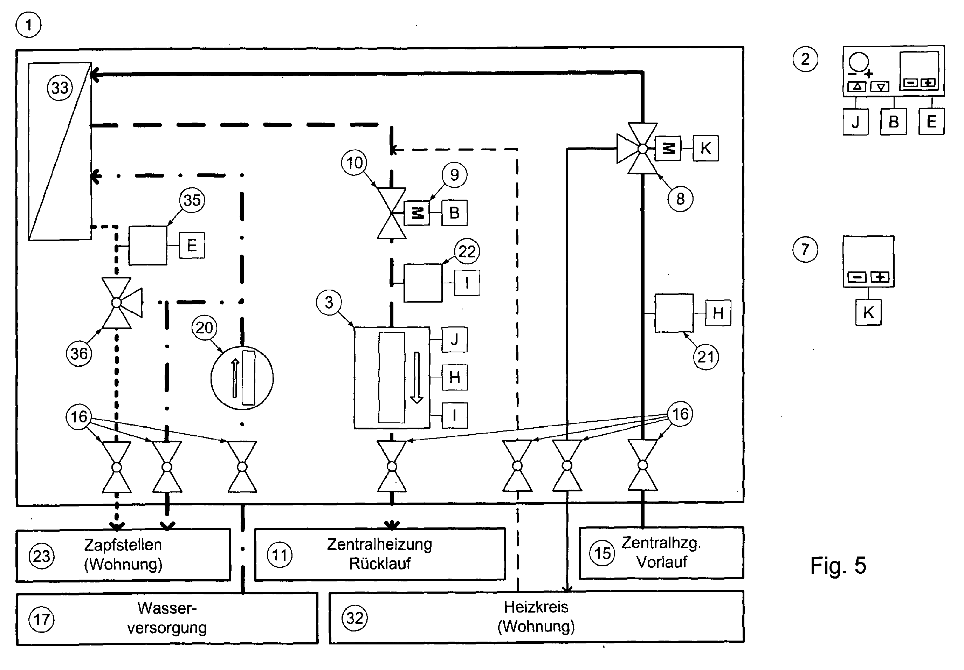

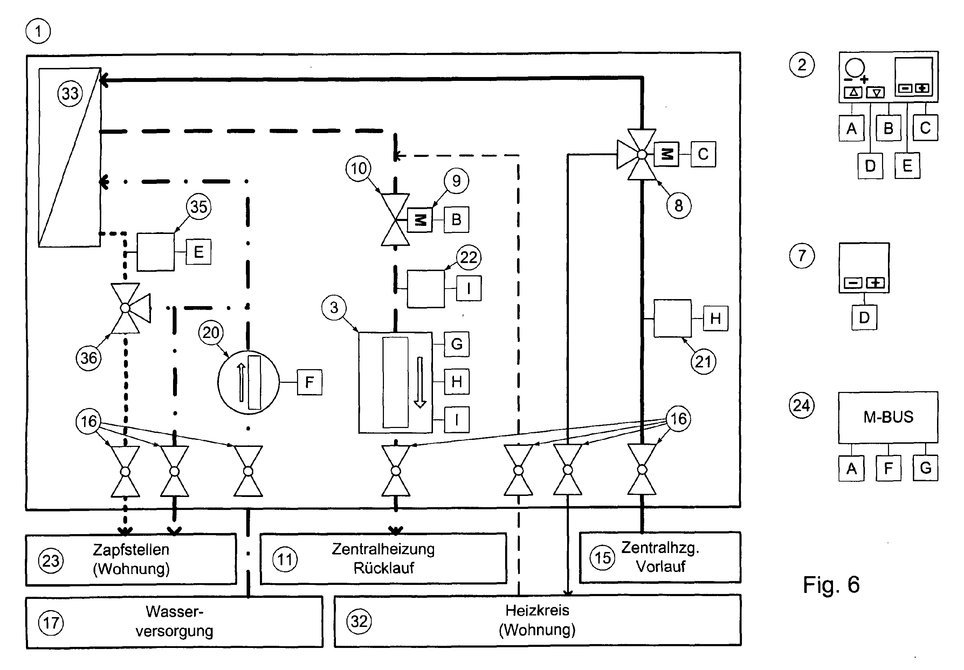

Die Nahewärmestationen sind in Figur 5 und 6 dargestellt. Die Nahwärmestationen1 erfüllen mehrere Funktionen. Zum einen dienen sie der Erwärmung des Trinkwassers mittels eines Wärmeübertragers 33 durch Wärme, die der Nahwärmestation 1 über den Vorlauf 15 von der Zentralheizung zur Verfügung gestellt wird. Die Nahwärmestation 1 ist über einen Kugelhahn 16 mit dem Vorlauf 15 verbunden. Die Temperatur des Wärmeträgers im Vorlauf wird von einem Vorlauftemperaturfühler 21 erfasst. Außerdem ist der Vorlauf innerhalb der Nahwärmestation 1 über ein motorgetriebenes Umschaltventil 8 geführt. An dem Umschaltventil zweigt eine Vorlaufleikung eines Heizkreises 32 zur Versorgung der Wohneiheit mit Raumwärme ab.

Das motorgetriebene Umschaltventil 8 ist mit einem Raumthermostat 7 verbunden, über welches das Umschaltventil 8 Stellsignale erhält. In Abhängigkeit von der von dem Raumthermostat 7 erfassten und der vom Benutzer gewünschten Raumtemperatur wird das Umschaltventil so eingestellt, dass dem Heizkreis 32 die zum Erreichen der gewünschten Raumtemperatur notwendige Wärme zur Verfügung gestellt wird. Über einen Rücklauf des Heizkreises 32 fließt der in dem Heizkreis 32 abgekühlte Wärmeträger zurück in die Nahwärmestation.

Das Umschaltventil 8 wird dabei mit Vorrang für die Trinkwassererwärmung betreiben. Das bedeutet, dass eine Wärmeversorgung des Heizkreises vermindert wird oder eingestellt wird, sofern Wärme für die Trinkwassererwärmung mittels des Wärmeübertragers 33 benötigt wird, was immer dann der Fall ist, wenn eine Zapfstelle 23 für warmes Trinkwasser geöffnet wird. Das wird über einen Durchflusssensor 35 in der Leitung für erwärmtes Trinkwasser TWW erfasst. Die Zapfstellen 23 für warmes Trinkwasser sind (Fig. 1) über Leitungen TWW an den Wärmeübertrager 33 der Nahwärmestation 1 angeschlossen. Der Durchflusssensor 35 meldet die Abnahme von erwärmten Trinkwasser an ein Steuerungsmittel 2, welches das Umschaltventil 8 ansteuert, welches einen Durchfluss zum Wärmeübertrager 33 freigibt.

Die Nahwärmestation ist über einen Kugelhahn 16 die Wasserversorgung 17 angeschlossen. Das zugeführte Wasser wird mit einen Wasserzähler 20 erfasst. Hinter dem Wasserzähler 20 verzweigt die Wasserleitung. Ein erste Zweig führt zum Wärmeübertrager 33 und liefert das zu erwärmende Trinkwasser. Ein zweiter Zweig wird als Trinkwasserleitung TW zu den verschiedenen Zapfstellen 23 für nicht erwärmtes Trinkwasser geführt.

Sowohl die Trinkwasserleitung TW für nicht erwärmtes Trinkwasser als auch die Trinkwasserleitung TWW für Warmwasser sind über Kugelhähne 16 mit der Nahwärmestation verbunden.

Über verschiedenen Heizkörper des Heizkreises 32 kann in den Wohneinheiten die Wärme auf die Raumluft übertragen werden. Dadurch kühlt der über einen Vorlauf 32a (Figur 1) zugeführte Wärmeträger ab und wird abgekühlt über einen Rücklauf 32b wieder zur Nahwärmestation 54 geführt.

Die Nahwärmestation 1 führt den in dem Heizkreislauf 32 abgekühlten Wärmeträger und den im Wärmeübertrager zum Erwärmen des Warmwassers abgekühlten Wärmeträger dem Rücklauf 11 zu, der den abgekühlten Wärmeträger wieder der Zentralheizung 53 zuführt.

Vor dem Eintritt in die Leitung des Rücklaufs 11 zu der Zentralheizung 53 wird der abgekühlt Wärmeträger über ein Ventil 10, einen Rücklauftemperaturfühler 22 und einen Wärmemengenzähler 3 geführt (Figur 5 und 6).

Sowohl der Vorlauftemperaturfühler 21 als auch der Rücklauftemperaturfühler 22 sind an den Wärmemengenzähler 3 angeschlossen, in den ein Volumenstromzähler integriert ist. Aus den erfassten Temperaturen und dem Volumenstrom kann die in der Wohneinheit abgenommene Wärme erfasst werden.

Jede der in Figur 1 dargestellten Nahwärmestationen 1 des Warmwasser und Heizungswärmesystems ist über eine Leitungan eine zur Zentralheizung 53 führenden Hauptleitung oder Steigleitung des Wärmeverteilsystems angeschlossen ist. Damit ein hydraulischer Abgleich des Wärmeverteilsystems möglich ist, sind in den Nahwärmestationen 1 (siehe Figur 5 oder 6) die Ventile 10 zum Einstellen des Strömungswiderstands jeder Leitung vorgesehen. Beim Abgleichen werden diese Ventile 10 betätigt, so dass durch ein Einstellen des Strömungswiderstands der Leitungen ein Abgleich des gesamten Wärmeverteilsystems möglich ist. Eine Ansteuerung der Ventile ist über das Steuerungsmittel 2 und Stellantrieb oder Betätigungsmittel 9 möglich, wobei das Steuerungsmittel 2 Informationen des Wärmemengenzählers 3 auswertet. Der Wärmemengenzähler stellt dazu insbesondere ein Signal über den Volumenstrom des Wärmeträgers zur Verfügung.

Die in den Figuren 5 und 6 dargestellten Nahwärmestationen 1 unterscheiden sich im Wesentlichen dadurch, dass das Steuerungsmittel 2, der Wasserzähler 20 und der Wärmemengenzähler 3 eine Schnittstelle zu einem Bussystem, dem so genannten M-BUS 24 aufweisen. Der M-BUS 24 dient einerseits der Übermittlung von Verbrauchswerte zur Rechrtungserstellung. Andererseits können über den M-BUS Informationen von dem Wärmemengenzähler und an das Steuerungsmittel 2 zum Einstellen des Ventils 10 beim hydraulischen Abgleich übertragen werden, auch zu weiteren Steuerungsmittel zum Zwecke des hydraulischen Abgleichs.

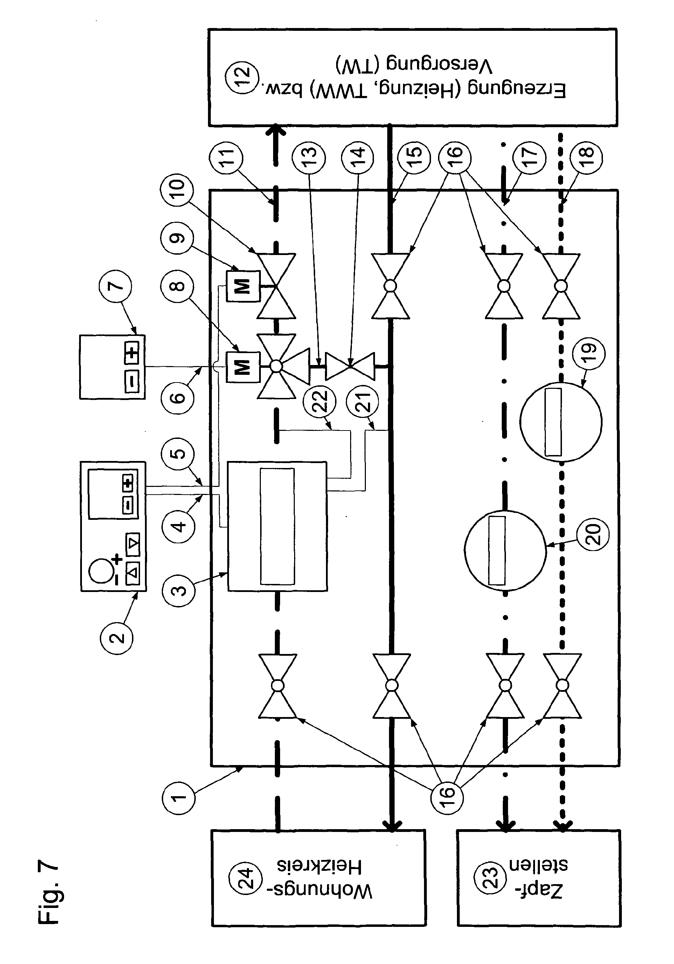

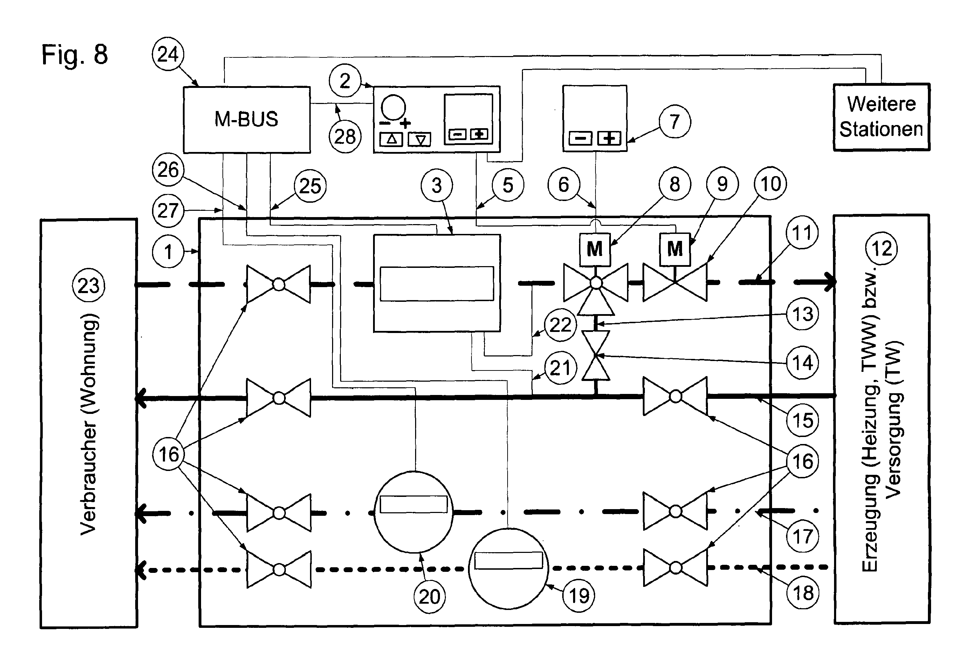

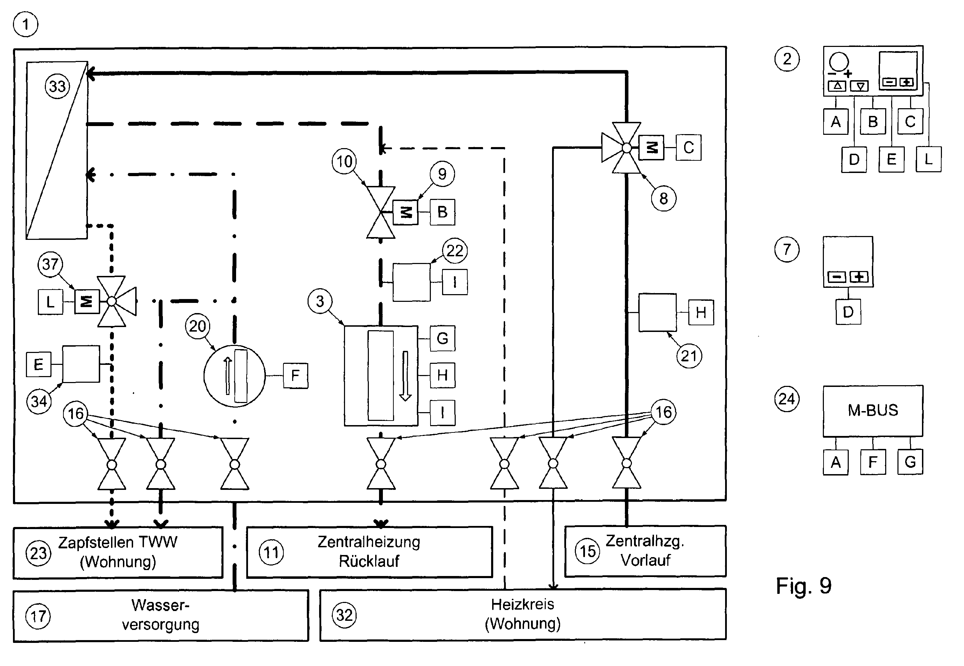

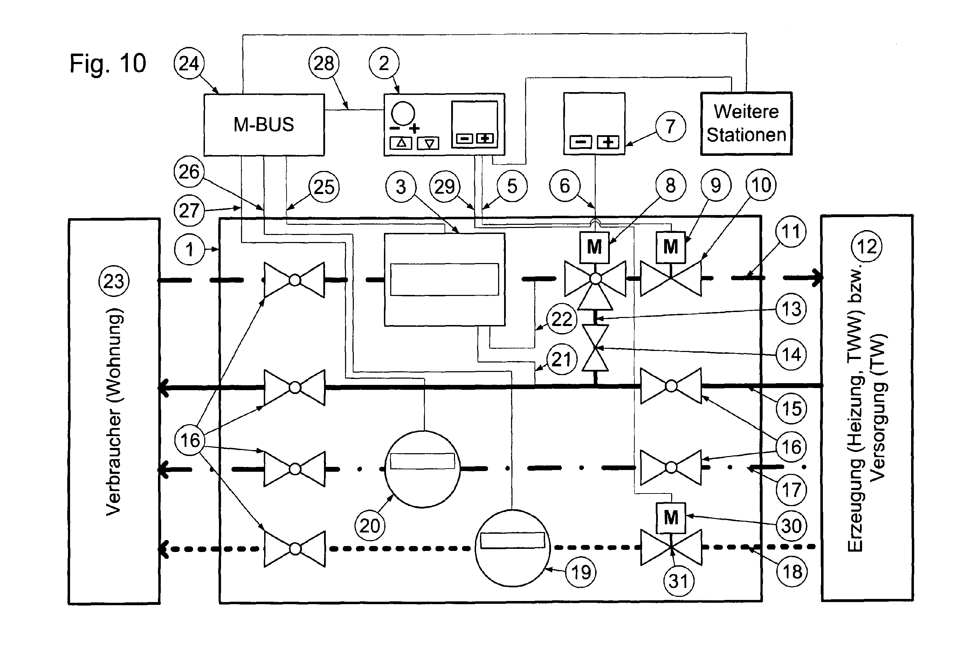

In Figur 7 und 8 sind schematisch Wohnungsanschlusskästen 1a dargestellt, mit denen ein Heizkreis 24 einer Wohnung und Leitungen für die Versorgung der Zapfstellen 23 der Wohnung mit erwärmtem und nicht erwärmtem Trinkwasser erfolgt.

Die Wohnungsanschlusskästen 1a unterscheiden grundlegend von den in den Figuren 5 und 6 dargestellten Nahwärmestationen durch eine von der Heizwärmeversorgung getrennte Versorgung mit erwärmten Trinkwasser. So ist der Wohnungsanschlusskasten neben dem Vorlauf 15 eines Wärmeerzeugers, dem Rücklauf 11 des Wärmeerzeugers und der Leitung 17 für nicht erwärmtes Trinkwasser auch an eine Leitung für erwärmtes Trinkwasser 18 angeschlossen. Der Verbrauch des erwärmten und nicht erwärmten Trinkwassers wird mit Wasserzählern 19 und 20 verbunden. Das Trinkwassersystem wird wegen der Entkoppelung von dem Heizsystem nicht beim hydraulischen Abgleich berücksichtigt.

Ein Wärmemengenzähler 3 ist, wie aus den Figuren 5 und 6 bekannt, mit Sensoren 21, 22 zur Erfassung der Temperaturdifferenz zwischen dem Vorlauf und dem Rücklauf verbunden und weist einen integrierten Volumenstromzähler auf, dessen Signal an einer Schnittstelle des Wärmezählers abgegeben wird. Ebenso ist ein mit einem Stellantrieb ausgestattetes Umschaltventil 8 und ein mit einem Stellantrieb 9 ausgestattetem Strangregulierventil 10 vorgesehen. Ersteres dient der Einstellung Freigabe einer Strömung in dem Heizkreis 24 der Wohnung, zweiteres dem hydraulischem Abgleich. Der Stellantrieb des Umschlatventil 8 ist mit einem Raumthermostat 7 verbunden und wird von diesem bei Anforderung von Heizwärme geöffnet.

Ein Steuerungsmittel 2 ist mit dem Wärmemengenzähler 3 und mit dem Stellantrieb 9 des Strangregulierventils 10 zum Durchführen des hydraulischen Abgleichs verbunden.

Der Wohnungsanschlusskasten 1a gemäß der Figur 8 unterscheidet sich von dem gemäß der Figur 7 durch den Anschluss der Wasserzähler 19, 20, des Wärmemengenzählers 3 und des Steuerungsmittel 2 an den M-BUS, an den auch Komponenten weiterer Wohnungsanschlusskästen angeschlossen sein können.

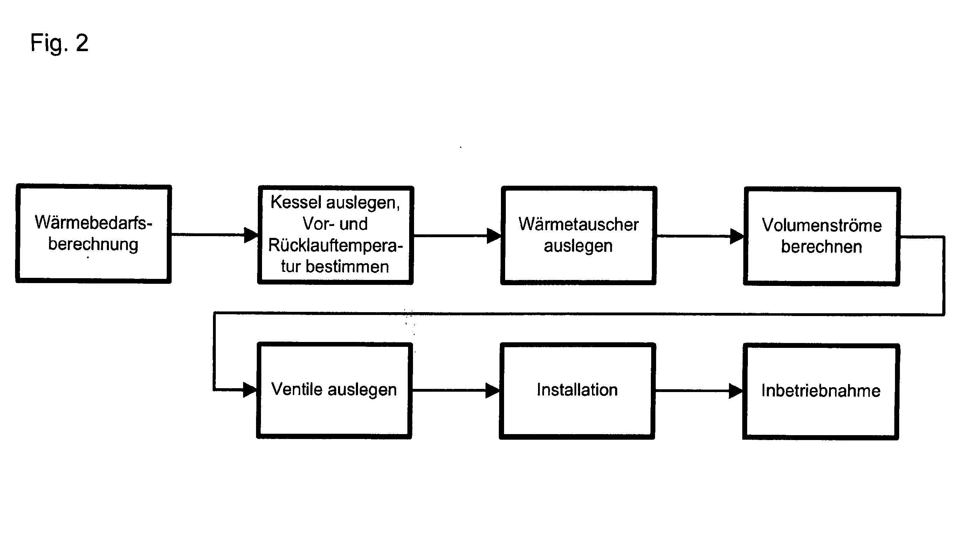

Vor der Durchführung eines hydraulischen Abgleichs sind einige vorbereitende Maßnahmen notwendig, wie sie in dem Flussdiagramm gemäß Figur 2 dargestellt sind. Zunächst einmal muss der Wärmebedarf des Gebäudes berechnet werden. Zu berücksichtigen ist dabei zum einen der Heizwärmebedarf und der Wärmebedarf für die Trinkwassererhitzung. Aufgrund des ermittelten Wärmebedarfs kann dann die Heizungsanlage ausgelegt werden und die Soll-Vorlauf- und Soll-Rücklauftemperatur bestimmt werden. Außerdem können die Wärmeübertrager ausgelegt werden, mit welchen die Wärme auf die zu beheizenden Räume oder das zu erhitzende Wasser übertragen werden.

Damit eine ausreichende Wärmeversorgung der Wärmeübertrager möglich ist, müssen die Volumenströme berechnet werden, mit welchen die Wärme von der Heizungsanlage zu den Wärmeübertragern transportiert werden sollen. Um diese Volumenströme einstellen zu können, sind die Ventile 10 notwendig, die gemäß der erforderlichen Volumenströme eingestellt werden.

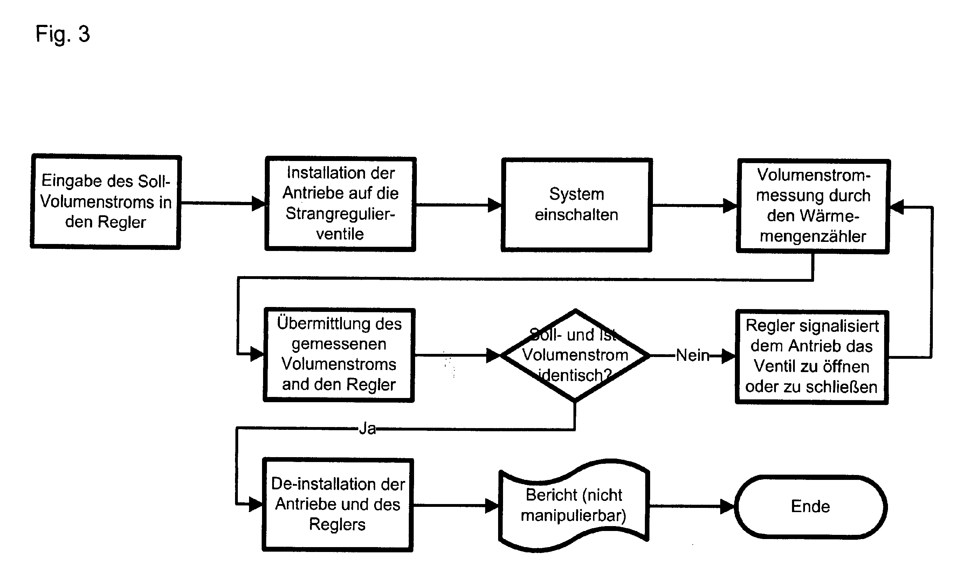

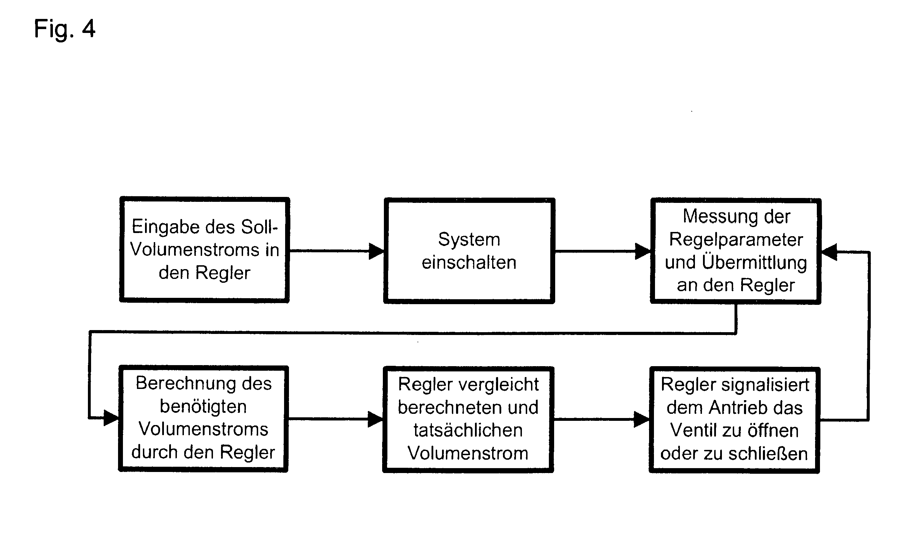

Nachdem dann die verschiedenen Teile des gesamten Systems montiert worden sind, kann ein hydraulischer Abgleich des Systems durchgeführt werden, wie er anhand von Figur 3 und von Figur 4 erläutert wird.

Lösgelöst von dem in Figur 1 dargestellten System und den in Figur 5 und 6 dargestellten Nahwärmestationen 1 bzw.
Wohnungsanschlusskästen 1a gemäß den Figuren 7 und 8 bieten sich grundsätzlich zwei Möglichkeiten des hydraulischen Abgleichs. Bei der ersten Möglichkeit (Figur 3) wird lediglich bei der Inbetriebnahme des Systems ein hydraulischer Abgleich durchgeführt. Die weitere Möglichkeit besteht darin, auch während des laufenden Betriebs einen ständigen hydraulischen Abgleich des Systems durchzuführen, wodurch weitere Effizienzsteigerungen des Systems möglich sind (Figur 4).

Soll lediglich während der Inbetriebnahme ein Abgleich durchgeführt werden, wird erfindungsgemäß folgendermaßen vorgegangen:

In die ausgewählten Regelungsmittel werden die Soll-Volumenströme eingegeben. Anschließend werden Betätigungsmittel an den Ventilen montiert. Ebenso wird das Regelungsmittel und die Messmittel in das System eingebracht. Die Messmittel und das Regelungsmittel einerseits und das Regelungsmittel und die Betätigungsmittel andererseits werden mittels der ausgewählten Kommunikationsmittel miteinander verbunden. Als Kommunikationsmittel können Leitungen gewählt werden. Ebenso ist es möglich, drahtlose Kommunikationsmittel auszuwählen, zum Beispiel Funkkommunikationsmittel. Sind alle Komponenten der erfindungsgemäßen Anordnung zum hydraulischen Abgleichen des Systems montiert, kann das System in Betrieb genommen werden. Während der Inbetriebnahme werden dann durch die gewählten Messmittel die Strömungen in den Strängen des Systems ermittelt. Die Messwerte werden von den Messmitteln zu dem Regelungsmittel übertragen. Im Regelungsmittel erfolgt dann ein Vergleich des Soll-Volumenstroms mit den Messwerten, d. h. den Ist-Volumenströmen.

Sofern eine Regeldifferenz vorliegt, erzeugt das Regelungsmittel Stellsignale zum Öffnen oder Schließen der Ventile, um die Volumenströme in die gewünschte Richtung zu ändern. Anschließend erfolgt eine erneute Messung der Ist-Volumenströme und die Übertragung der Messwerte an das Regelungsmittel. Sofern erneut eine Regeldifferenz vorliegt, werden weitere Stellwerte erzeugt. Sobald die Regeldifferenz ausgeglichen ist, ist das System hydraulisch abgeglichen. Die Betätigungsmittel, das Regelungsmittel, die Messmittel und die Kommunikationsmittel können dann demontiert werden, während die Ventile in dem System verbleiben. Anschließend wird noch ein nicht manipulierbarer Bericht über den hydraulischen Abgleich angefertigt.

Der laufende hydraulische Abgleich während des Betriebs des Systems ist in Figur 4 nur in einer groben Übersicht dargestellt. Im Großen und Ganzen entspricht der Ablauf jedoch den in Figur dargestellten, mit dem wesentlichen Unterschied, dass die verschiedenen Komponenten der erfindungsgemäßen Anordnung alle dauerhaft in dem System verbleiben. So sind beispielsweise die als Betätigungsmittel vorgesehenen Motoren 9 fest an den Ventilen 10 angebracht und

## Patentansprüche

1. System zum Kühlen oder Heizen mit einem flüssigen oder gasförmigen Wärmeträger umfassend:
- wenigstens eine Vorlauf-Leitung (15) zum Transport des Wärmeträgers von wenigstens einem Wärmeerzeuger zu einer oder mehreren Verbrauchsstellen,
- wenigstens eine Rücklauf-Leitung (11) zum Transport des Wärmeträgers von der oder den Verbrauchsstellen zu dem wenigstens einen Wärmeerzeuger,
- wenigstens eine zum Einstellen eines Strömungswiderstands geeignete und eingerichtete Drosselarmatur (10),
- wenigstens ein zum Ermitteln eines Volumenstroms des Wärmeträgers in der Vorlauf-Leitung (15) und/oder der Rücklauf-Leitung (11) geeignete und eingerichtete Messeinrichtung (3),
**dadurch gekennzeichnet, dass**
die wenigstens eine Messeinrichtung ein Wärmezähler (3) ist, der ein Mittel zur Messung des Volumenstroms in der Vorlauf-Leitung (15) und/oder der Rücklauf-Leitung (11) umfasst und eine Schnittstelle zum Auslesen des Ermittelten Volumenstroms aufweist.

2. System nach Anspruch 1, **dadurch gekennzeichnet, dass** der Wärmezähler (3) ein Temperaturmessmittel (21) zum Erfassen der Temperatur im Vorlauf und ein Temperaturmessmittel (22) zum Erfassen der Temperatur im Rücklauf umfasst.

3. System nach Anspruch 2, **dadurch gekennzeichnet, dass** der Wärmezähler (3) zur Berechnung transportierten Wärmemenge aus dem gemessenen Volumenstrom und der Temperaturdifferenz zwischen dem Vorlauf und dem Rücklauf geeignet und eingerichtet ist.

4. System nach einem der Ansprüche 1 bis 3, **dadurch gekennzeichnet, dass** die Drosselarmaturen (10) Strangregulierventile sind.

5. System nach einem der Ansprüche 1 bis 4, **dadurch gekennzeichnet, dass** das System wenigstens ein zum Betätigen der Drosselarmaturen (10) geeignete und eingerichtetes Betätigungsmittel (9) aufweist.

6. System nach Anspruch 5, **dadurch gekennzeichnet, dass** das System wenigstens ein Steuerungs- und/oder Regelmittel (2) aufweist, dass zum Erzeugen von Stellsignalen zum Betätigen der Drosselarmaturen (10) geeignet und eingerichtet ist, die von den ermittelten Volumenströmen abhängen.

7. System nach Anspruch 6, **dadurch gekennzeichnet, dass** das System zum Übertragen der von dem Steuerungs- und/oder Regelmittel (2) erzeugten Stellsignale an die Betätigungsmittel (9) und zum Übertragen der ermittelten Volumenströme von den Messeinrichtung (3) an die Steuerungs- und/oder Regelmittel (2)geeignete und eingerichtete Kommunikationsmittel aufweist.

8. Anordnung zum hydraulischen Abgleichen eines einen Wärmeträger führenden Systems nach dem Oberbegriff des Anspruchs 1, insbesondere zum Kühlen oder Heizen, mit mehreren Leitungen umfassend:
- das den Wärmeträger führende System nach dem Oberbegriff des Anspruchs 1,
- zum Betätigen der Drosselarmaturen (10) geeignete und eingerichtete Betätigungsmittel (9),
- zum Erzeugen von den ermittelten Volumenströmen abhängenden Stellsignalen zum Betätigen der Drosselarmaturen (10) geeignete und eingerichtete Steuerungs- und/oder Regelmittel (2),
- zum Übertragen der von dem Steuerungs- und/oder Regelmittel (2) erzeugten Stellsignale an die Betätigungsmittel (9) und zum Übertragen der Messwerte von den Messmitteln (3) an die Steuerungs- und/oder Regelmittel (2) geeignete und eingerichtete Kommunikationsmittel,
**dadurch gekennzeichnet, dass**
die Betätigungsmittel (9), Messmittel (3), Steuerungs- und/oder Regelmittel (2) und/oder Kommunikationsmittel zum Zwecke des Abgleichens des Systems bei einer Inbetriebnahme an Teilen des Systems montierbar und nach erfolgtem Abgleich demontierbar sind.

9. Anordnung nach Anspruch 7, **dadurch gekennzeichnet, dass** das System die Merkmale nach Anspruch 7 aufweist und für einen laufenden hydraulischen Abgleich während des Betriebs des Systems zum Kühlen oder Heizen geeignet und eingerichtet ist.

10. Verfahren zum Abgleichen einer Anordnung nach Anspruch 8 oder 9 umfassend folgende Schritte:
a). Berechnung der durch die Vorlauf- und/oder Rücklauf-Leitungen des abzugleichende Systems im Auslegungsfall strömenden Soll-Volumenströme,
b). ggf. Ausstattung des Systems mit den Betätigungsmitteln (9), Messmitteln (3), dem Steuerungs- und/oder Regelmittel (2) und/oder den Kommunikationsmittel und den Drosselarmaturen (10),
c). Ermitteln der durch die Vorlauf- und/oder Rücklauf-Leitungen des abzugleichende Systems beim Abgleich strömenden Volumenströme durch die Messeinrichtung,
d). Übertragung der Messwerte für die ermittelten Volumenströme an das Steuerungs- und/oder Regelungsmittel (2) durch die Kommunikationsmittel,
e). Vergleich der Messwerte der ermittelten Volumenströme mit den berechneten Soll-Volumenströme und Ermittelung der Stellsignale durch das Steuerungs- und/oder Regelungsmittel (2),
f). Übertragung der Stellsignale an die Betätigungsmittel (9) durch die Kommunikationsmittel,
g). Einstellen der Drosselarmaturen (10) durch die Betätigungsmittel (9),
h). Wiederholen der Schritte c bis g bis die ermittelten Volumenströme den Soll- Volumenströmen entsprechen.

11. Verfahren nach Anspruch 10, **dadurch gekennzeichnet, dass** das Verfahren nach dem Einstellen der Ventile folgenden Schritt umfasst:
i) Lösen der Betätigungsmittel (9), Messmittel (3), dem Steuerungs- und/oder Regelmittel (2) und/oder der Kommunikationsmittel von dem System bei Verbleib der eingestellten Drosselarmaturen (10) in dem System.
